# EUROPEAN PATENT APPLICATION

(11) **EP 1 983 775 A1**
(43) Date of publication of application: **22.10.2008**
(21) Application number: 07708165.1
(22) Date of filing: 07.02.2007
(51) Int. Cl.: H04Q 7/22, H04L 12/28, H04Q 7/38

(54) **RADIO COMMUNICATION BASE STATION DEVICE, RADIO COMMUNICATION TERMINAL DEVICE, AND RADIO COMMUNICATION SYSTEM**

(30) Priority: 08.02.2006 JP 2006031588; 18.04.2006 JP 2006114950
(71) Applicant: Matsushita Electric Industrial Co., Ltd., Kadoma-shi Osaka 571-8501 (JP)
(72) Inventor: FUKUI, Akito, c/o Matsushita Electric Industrial Co., Ltd., 2-1-61, Shiromi, Chuo-ku, Osaka 540-6207 (JP); AOYAMA, Takahisa, c/o Matsushita Electric Industrial Co., Ltd., 2-1-61, Shiromi, Chuo-ku, Osaka 540-6207 (JP); HARUM, Norharyati Binti, c/o Matsushita Electric Industrial Co., Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2007/052126
(87) International publication number: WO 2007/091598

(57) **Abstract**

Provided are a radio communication base station device, a radio communication terminal device, and a radio communication system capable of reducing the processing load of a base station and an access gateway in a cell reselection process. When desynchronization between a terminal (150) and a source base station is detected, the terminal (150) performs a narrow-region cell search for an adjacent base station connected directly to the source base station. If no adjacent base station is detected, a wide-region cell search is performed for other than the adjacent base station. A base station detected is made as a target base station and a cell update is requested. The source base station transmits terminal information to the access gateway after a timer has counted up the time required for the narrow-region cell search at the terminal. The base station which has received the cell update request acquires a terminal acknowledgment and terminal information from the source base station or the access gateway depending on whether the source base station is directly connected.

## Description

### Technical Field

The present invention relates to a wireless communication base station apparatus, wireless communication terminal apparatus and wireless communication system.

### Background Art

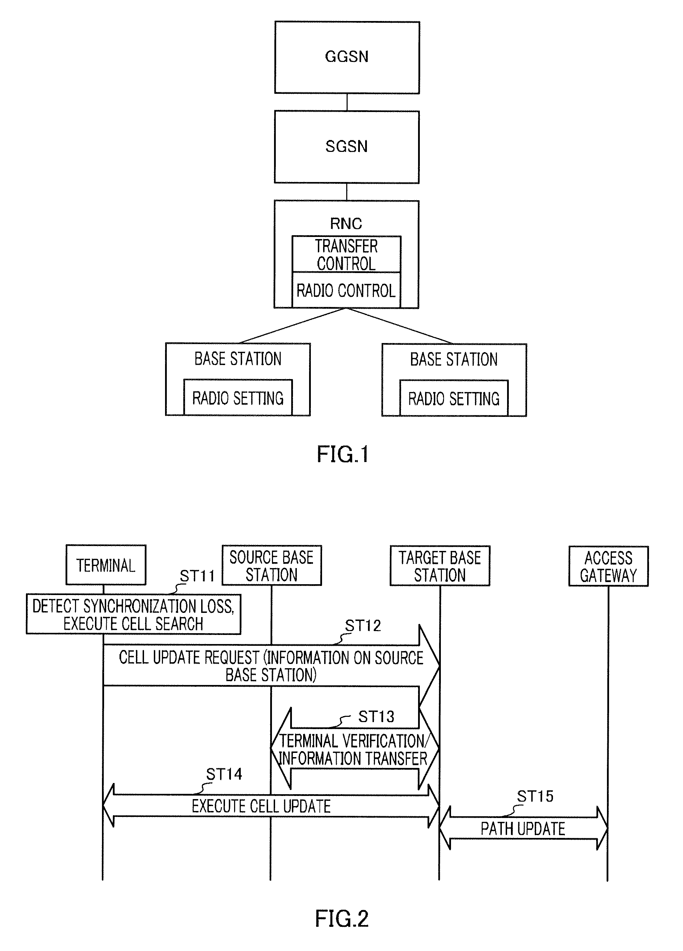

In a cellular system such as a mobile telephone, transfer control for controlling, for example, a base station connected according to a move of a terminal, is one of the most important functions. FIG. 1 shows a schematic configuration of a UMTS (Universal Mobile Telecommunications System) in the 3GPP (3rd Generation Partnership Project). As shown in FIG. 1, base stations only make radio settings, and there is in an upper class an RNC (Radio Network Controller) that controls a plurality of base stations, and the RNC carries out transfer control and radio control. There are two major transfer processing schemes in this system. That is, these are two schemes of handover processing and cell reselection processing.

The handover processing is a scheme whereby the network side (RNC) shows a cell to be connected to a terminal, and is used when the terminal is connected with the base station, for example, when the terminal carries out communication. More specifically, the handover processing is used when an RRC (Radio Resource Control) state of the terminal is a "CELL_DCH state."

As a flow of the handover processing, the RNC commands the terminal to move through a currently connected base station. In this case, a channel setting and the like which will be used after the move is also transmitted to the terminal. The terminal carries out transfer processing and reports the move to the RNC through a new base station after the move.

Next, the cell reselection processing is a scheme for selecting a cell with which a terminal is connected, and this scheme is used when the terminal is not in communication or when there are not many activities even when the terminal is in communication. More specifically, the cell reselection processing is used when an RRC state of the terminal is an "Idle, " "CELL/URA_PCH" or "CELL_FACH state." Furthermore, even when the RRC state of the terminal is a CELL_DCH state, if the connection with the currently connected base station is broken, for example, this cell reselection is used to select a new cell.

As a flow of the cell reselection processing, when the terminal is in an Idle state, only the base station from which the terminal receives broadcast information is changed. On the other hand, when the terminal is in a CELL/URA_PCH or CELL_FACH state, the terminal side selects an optimal cell and reports to the RNC that the cell has been changed through the base station that manages the cell selected by the terminal. The RNC transmits a channel setting to be used to the terminal through a base station that manages a new cell. The terminal makes a channel setting with the received channel setting content and then reports a notice of completion.

Furthermore, the 3GPP is currently studying LTE (Long Term Evolution) as an extension of the UMTS. In LTE, there is no CELL/URA_PCH or CELL_FACH state, and so cell reselection is applicable only to a terminal in an Idle state or a terminal which was in communication yet has broken its connection.

Furthermore, transfer control or radio control employed in a conventional RNC may be shifted to a base station. Here, how cell reselection is designed using LTE will be considered. Regarding a terminal in an Idle state, messages are not exchanged between the terminal and the base station even when the cell is changed, and so there is particularly no significant factor to be newly considered. However, regarding a terminal which was in communication yet has broken its connection, messages are exchanged between the terminal and the base station, and so it is necessary to consider what processing should be carried out.

FIG.2 shows an overview of steps for cell reselection processing under study in LTE . In this figure, in step (hereinafter abbreviated as "ST") 11, when a terminal detects synchronization loss, the terminal carries out a cell search to search an appropriate cell.

In ST12, the terminal transmits a cell update request to a base station (target base station) that manages the cell detected in ST11. In this case, the terminal transmits information of the cell to which the terminal has belonged. More specifically, the information includes, for example, the cell number, the number assigned by a base station (source base station) that manages the cell.

In ST13, the target base station exchanges information with the source base station to determine whether or not the cell update request transmitted from the terminal has really been transmitted from the right terminal and confirm, for example, the setting previously used by the terminal, state and capacity of the terminal.

In ST14, the target base station transmits a message for executing a cell update to the terminal. The terminal carries out processing according to the message and returns a response message showing an end of the update after completion, to the target base station.

In ST15, the target base station reports to an access gateway that the base station has been changed and updates the path.

In this way, according to LTE, information is exchanged between the target base station and the source base station. In FIG.2, a direct connection is assumed to be set between the base stations, and the communication using this direct connection should be secure (encryption keys and the like should be provided between the source base station and the target base station) because information of the terminal and the like is handled.

However, when all information is exchanged between the source base station and the target base station through direct connections, many connections need to be set between the base stations, which results in a problem that the load on the base stations increases.

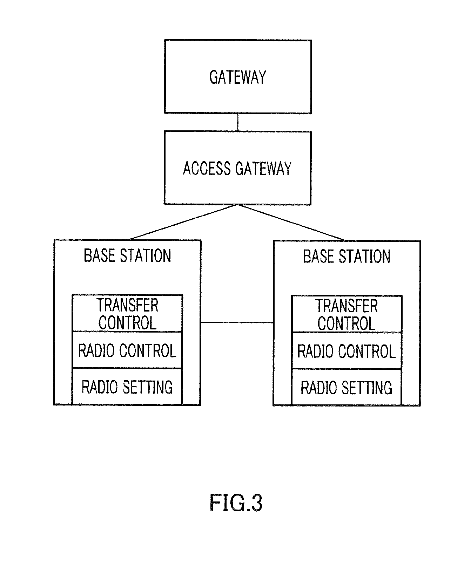

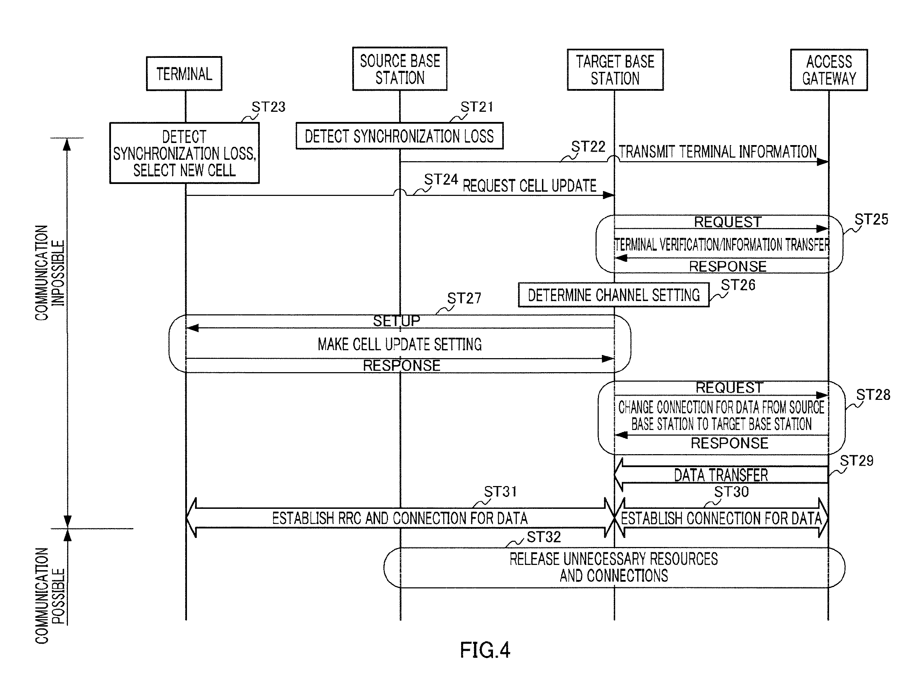

Therefore, communication may be carried out between the base stations through an access gateway in an upper class using the system configuration based on LTE shown in FIG.3. FIG. 4 shows an overview of steps for cell reselection processing of carrying out communication between the base stations through the access gateway.

In ST21, the source base station detects loss of synchronization with the terminal, and, in ST22, reports information of the terminal to the access gateway, and the access gateway holds the information of the terminal.

In ST23, the terminal detects loss of synchronization with the source base station, detects the target base station by carrying out a cell search and, in ST24, transmits a cell update request to the target base station.

In ST25, the target base station requests the access gateway to provide the information of the terminal, and the access gateway responds to the target base station by providing the information of the terminal.

In ST26, the target base station verifies the terminal based on the information provided from the access gateway and also determines a channel setting based on information of a service and the like that has been carried out so far.

In ST27, the target base station sets up a channel setting for the terminal, and the terminal makes a channel setting according to a command from the target base station and reports the result to the target base station.

In ST28, between the target base station and the access gateway, the connection for data is changed from the source base station to the target base station, and, in ST29, data is transferred from the access gateway to the target base station.

In ST30, a connection for data is established between the target base station and the access gateway, and, in ST31, RRC and a connection for data are established between the terminal and the target base station.

In ST32, the source base station, target base station and access gateway release unnecessary resources and connections and the like. Here, for example, a connection between the source base station and the access gateway, and a connection between the source base station and the target base station, are released.

This eliminates the necessity for direct connections between the base stations, thereby reducing the processing load on the base stations. However, the cell reselection scheme that carries out communication between the base stations through the access gateway also has the following problem. That is, communication is always carried out through the access gateway which is located farther than the neighboring base stations, and so there is a problem that the cell reselection operation takes more time than in the case where communication is directly carried out between the base stations. Furthermore, the access gateway holds information from the source base station and responds to requests from the target base station and the like, which increases the load on the access gateway.

In this way, the two schemes have advantages and disadvantages and require schemes for compensating for the disadvantages. Therefore, a scheme that simply combines these two schemes will be shown below.

That is, a direct connection is set only between neighboring base stations, and communication is carried out between the base stations when there is a direct connection, and communication is carried out through an access gateway when there is no direct connection. Non-Patent Document 1: 3GPP TR25.331, "Radio Resource Control (RRC) Protocol Specification"

### Disclosure of Invention

### Problems to be Solved by the Invention

However, although the scheme combining the above described two schemes can reduce direct connections between the base stations, the source base station cannot learn which target base station is selected by the terminal, and so the source base station needs to transmit terminal information to the access gateway after all. Therefore, the access gateway needs to hold terminal information for every cell reselection, which does not lead to reduction of the load on the access gateway.

It is therefore an object of the present invention to provide a wireless communication base station apparatus, wireless communication terminal apparatus and wireless communication system capable of reducing the processing load on a base station and access gateway in cell reselection processing.

### Means for Solving the Problem

The wireless communication base station apparatus according to the present invention employs a configuration including: a cell reselection processing section that receives a cell update request from a wireless communication terminal apparatus and decides, based on the cell update request, whether or not a cell to which the wireless communication terminal apparatus belonged immediately before belonging to a cell of the wireless communication base station apparatus, is a neighboring cell managed by another wireless communication base station apparatus connected with the wireless communication base station apparatus through a direct connection; a message creation section that creates a message requesting information of the wireless communication terminal apparatus from an access gateway, which is an upper station, or the another wireless communication base station apparatus that manages the neighboring cell depending on whether or not the cell to which the wireless communication terminal apparatus belonged immediately before, is the neighboring cell; and a transmitting section that transmits the message.

The wireless communication base station apparatus according to the present invention employs a configuration including: a detection section that detects loss of synchronization with a wireless communication terminal apparatus; and a withholding section that withholds transmission of identification information of the wireless communication terminal apparatus to an access gateway, which is an upper station, until a specified time passes after detecting synchronization loss.

The wireless communication terminal apparatus according to the present invention employs a configuration including: a detection section that detects loss of synchronization with a wireless communication base station apparatus; a first cell search section that, when synchronization loss is detected, carries out a cell search based on neighboring cell information managed by another wireless communication base station apparatus connected with the wireless communication base station apparatus with which synchronization is lost, through a direct connection; a second cell search section that carries out a cell search targeting cells other than the neighboring cell when the neighboring cell is not detected by the first cell search section; and a requesting section that transmits a cell update request to the wireless communication base station apparatus that manages a detected cell.

### Advantageous Effect of the Invention

The present invention can reduce processing load on the base station and access gateway in cell reselection processing.

### Brief Description of Drawings

FIG. 1 shows a schematic configuration of UMTS according to the 3GPP;
FIG.2 is a sequence diagram showing an overview of steps for cell reselection processing;
FIG.3 is a system configuration diagram according to LTE;
FIG. 4 is a sequence diagram showing an overview of steps for cell reselection processing of carrying out communication between base stations through an access gateway;
FIG.5 is a block diagram showing a configuration of a base station according to Embodiments 1 and 2 of the present invention;
FIG. 6 is a block diagram showing a configuration of a terminal according to Embodiments 1 and 2 of the present invention;
FIG. 7 is a flowchart showing operation steps when the base station shown in FIG. 5 functions as a source base station;
FIG.8 is a flowchart showing operation steps when the base station shown in FIG. 5 functions as a target base station;
FIG. 9 is a flowchart showing operation steps of the terminal shown in FIG.6;
FIG. 10 is a sequence diagram showing steps for cell reselection processing when a neighboring cell can be detected;
FIG. 11 is a sequence diagram showing steps for cell reselection processing when no neighboring cell can be detected;
FIG.12 is a sequence diagram showing steps for cell reselection processing when terminal verification/information transfer and cell update setting are processed in parallel;
FIG.13 is a sequence diagram showing steps for cell reselection processing that reduces a data transfer delay;
FIG.14 is a flowchart showing the operation of the terminal according to Embodiment 2 of the present invention;
FIG. 15 is a flowchart showing the operation of the target base station according to Embodiment 2 of the present invention;
FIG.16 is a sequence diagram showing steps for cell reselection processing when a neighboring cell can be detected;
FIG. 17 is a sequence diagram showing steps for cell reselection processing when no neighboring cell can be detected;
FIG.18 is a sequence diagram showing steps for cell reselection processing when a neighboring cell can be detected; and
FIG.19 is a sequence diagram showing steps for cell reselection processing when no neighboring cell can be detected.

### Best Mode for Carrying Out the Invention

Now, embodiments of the present invention will be described in detail with reference to the accompanying drawings. The embodiments will be explained assuming that a base station has a function of carrying out radio control, and an upper station thereof has functions of authentication and determination of a service level and the like. However, the actual arrangement of functions is not limited to this, and an upper station of the base station may also have a radio control function, and a station that carries out radio control, authentication and determination of a service level may also be the same node.

### (Embodiment 1)

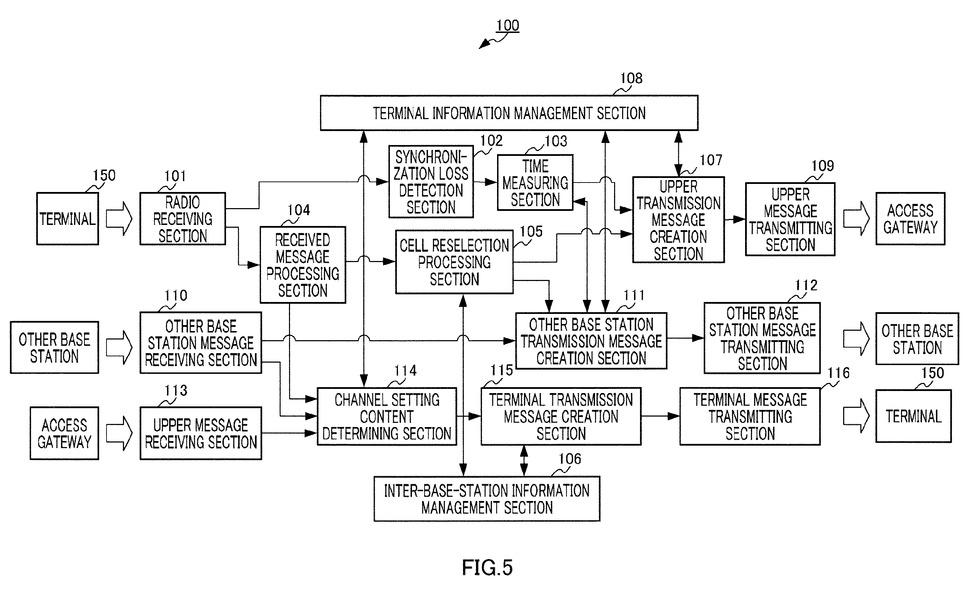

FIG. 5 is a block diagram showing a configuration of base station 100 according to Embodiment 1 of the present invention. In this figure, radio receiving section 101 receives a signal transmitted from terminal 150, transfers the received signal to received message processing section 104, and, at the same time, manages the communication state with terminal 150, and reports the communication state to synchronization loss detection section 102.

Synchronization loss detection section 102 monitors the communication state with terminal 150 reported from radio receiving section 101 and detects loss of synchronization with terminal 150. When synchronization loss is detected, the detection of synchronization loss is reported to time measuring section 103. This synchronization loss detection method can detect a case where a control signal transmitted from the terminal cannot be received, as synchronization loss, but the synchronization loss detection method is not particularly limited to this method, and any means may be used if synchronization loss can be detected.

Time measuring section 103, which is a withholding means, has a timer in which a specified time is set, starts the timer when synchronization loss is reported from synchronization loss detection section 102, and, when a specified time passes, commands upper transmission message creation section 107 to create a message. By this means, even when synchronization with terminal 150 is lost, it is possible to withhold a report to the access gateway, which is an upper station, for a specified time. Furthermore, the time measured by the timer of time measuring section 103 can be read by other base station transmission message creation section 111.

Received message processing section 104 processes the signal transferred from radio receiving section 101. More specifically, received message processing section 104 decides whether or not a cell update request transmitted from terminal 150 is a cell update request from terminal 150 managed by base station 100. Upon deciding that the cell update request is transmitted from terminal 150 managed by base station 100, received message processing section 104 reports the decision result to channel setting content determining section 114. On the other hand, upon deciding that the cell update request is transmitted from terminal 150 which is not managed by base station 100, received message processing section 104 reports the decision result to cell reselection processing section 105.

Upon receiving the result from received message processing section 104, that is, upon receiving a cell update request from terminal 150 which is not managed by base station 100, cell reselection processing section 105 confirms to inter-base-station information management section 106, whether or not a direct connection is set between terminal 150 and another base station that manages the cell in which terminal 150 existed immediately before. When the direct connection is set, cell reselection processing section 105 reports that the direction connection is set, to other base station transmission message creation section 111, and, when the direct connection is not set, reports that the direction connection is not set, to upper transmission message creation section 107.

Inter-base-station information management section 106 manages information of another base station (neighboring base station) connected with base station 100 through a direct connection, and cell reselection processing section 105 and terminal transmission message creation section 115 read the information of the base station. The information of the base station managed by inter-base-station information management section 106 includes, for example, a cell ID managed by the base station of the connection destination and encryption keys for securing the safety of data transmitted and received between the base stations.

Upon receiving a command for creating a message from time measuring section 103, upper transmission message creation section 107 reads terminal information from terminal information management section 108 and creates a message to be transmitted to the upper station by including the terminal information. Furthermore, upon receiving the report of a cell update request of terminal 150 from cell reselection processing section 105, upper transmission message creation section 107 creates a message commanding the establishment of a connection between a base station to be newly connected (hereinafter referred to as a "target base station") and the access gateway. The created message is outputted to upper message transmitting section 109.

Terminal information management section 108 manages terminal information such as terminal ID's, capacities of terminals, security settings and channel settings, and the terminal information is read by upper transmission message creation section 107, other base station transmission message creation section 111 and channel setting content determining section 114.

Upper message transmitting section 109 adapts the message outputted from upper transmission message creation section 107 to an interface with the access gateway and transmits the message to the access gateway.

Other base station message receiving section 110 receives a message transmitted from another base station, and, after another base station receives a cell update request, receives a message that requests base station 100 which has managed terminal 150 transmitting the cell update request, until immediately before, to verify terminal 150 and transfer terminal information (terminal verification/information transfer request), and outputs the received terminal verification/information transfer request message to other base station transmission message creation section 111. Furthermore, other base station message receiving section 110 outputs the terminal verification result transmitted from another base station to channel setting content determining section 114.

Upon receiving the report of the cell update request of terminal 150 from cell reselection processing section 105, other base station transmission message creation section 111 creates a terminal verification/information transfer request message. Furthermore, based on the terminal verification/information transfer request message for base station 100 outputted from other base station message receiving section 110 and the time measured by time measuring section 103, other base station transmission message creation section 111 reads the applicable terminal information from terminal information management section 108 and creates a message including the terminal verification result and terminal information. The created message is outputted to other base station message transmitting section 112.

Other base station message transmitting section 112 adapts the message outputted from other base station transmission message creation section 111 to an interface with another base station and transmits the message to another base station.

Upper message receiving section 113 receives a signal transmitted from the access gateway. More specifically, upper message receiving section 113 receives a response to the terminal verification/information transfer request transmitted to the access gateway after receiving the cell update request. The received response is outputted to channel setting content determining section 114.

Upon receiving the result from received message processing section 104, that is, upon receiving a cell update request from terminal 150 managed by base station 100, channel setting content determining section 114 reads the applicable terminal information from terminal information management section 108 and outputs the read terminal information to terminal transmission message creation section 115. Furthermore, channel setting content determining section 114 determines channel content to be set in terminal 150 based on the response to the terminal verification/information transfer request outputted from other base station message receiving section 110 or upper message receiving section 113. When communication is not allowed for terminal 150, channel setting content determining section 114 determines to release the connection. The determined channel content or connection release command is reported to terminal transmission message creation section 115.

Terminal transmission message creation section 115 creates a message including the channel content or connection release command reported from channel setting content determining section 114. Furthermore, terminal transmission message creation section 115 reads information of the base station connected with base station 100 through a direct connection (neighboring cell information) from inter-base-station information management section 106 and creates a broadcast message to broadcast the read neighboring cell information. The created message is outputted to terminal message transmitting section 116.

Terminal message transmitting section 116 adapts the message outputted from terminal transmission message creation section 115 to an interface with terminal 150 and transmits the message to terminal 150.

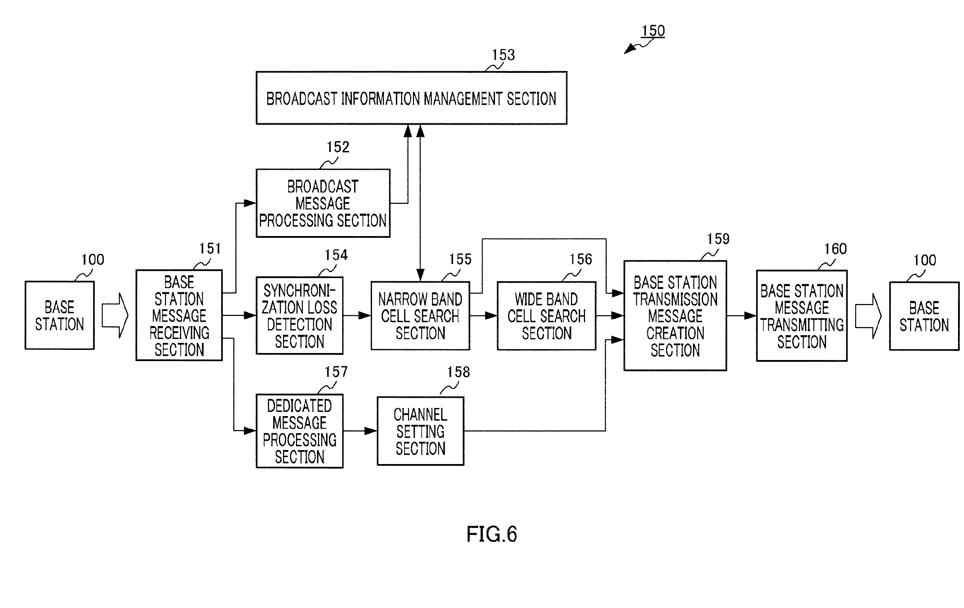

FIG.6 is a block diagram showing a configuration of terminal 150 according to Embodiment 1 of the present invention. In this figure, base station message receiving section 151 receives messages transmitted from base station 100, outputs a broadcast message out of the received messages to broadcast message processing section 152 and outputs a dedicated message to dedicated message processing section 157. Furthermore, base station message receiving section 151 manages the communication state with base station 100 and reports the communication state to synchronization loss detection section 154.

Broadcast message processing section 152 processes the broadcast message outputted from base station message receiving section 151 and outputs information necessary for terminal 150 (e.g., neighboring cell information) to broadcast information management section 153.

Broadcast information management section 153 manages the information outputted from broadcast message processing section 152, particularly, neighboring cell information as a narrow band cell list, and narrow band cell search section 155 reads the neighboring cell information (narrow band cell list).

Synchronization loss detection section 154 monitors the communication state with base station 100 reported from base station message receiving section 151 and detects loss of synchronization with base station 100. When synchronization loss is detected, the detection of synchronization loss is reported to narrow band cell search section 155. This synchronization loss detection method can detect a case where a control signal and reference signal transmitted from the base station cannot be received, as synchronization loss, but the synchronization loss detection method is not limited to this method, and any means can be used if synchronization loss can be detected.

Upon receiving the report of synchronization loss from synchronization loss detection section 154, narrow band cell search section 155 reads neighboring cell information from broadcast information management section 153 and carries out a cell search (narrow band cell search) in the neighboring cell based on the neighboring cell information. When the cell has been successfully detected as a result of this narrow band cell search, narrow band cell search section 155 reports the detected cell to base station transmission message creation section 159, and, when the cell has not been successfully detected, narrow band cell search section 155 reports that the cell has not been successfully detected, to wide band cell search section 156.

Upon receiving the report that the neighboring cell has not been detected from narrow band cell search section 155, wide band cell search section 156 carries out a cell search by widening the range of cell search (wide band cell search). Wide band cell search section 156 reports a cell detected as a result of this wide band cell search to base station transmission message creation section 159.

Dedicated message processing section 157 processes the dedicated message outputted from base station message receiving section 151. More specifically, dedicated message processing section 157 processes a channel setting message transmitted from the target base station and determines the channel configuration set by terminal 150. The determined channel configuration is reported to channel setting section 158.

Channel setting section 158 makes a channel setting according to the channel configuration reported from dedicated message processing section 157 and reports the channel setting result to base station transmission message creation section 159. Here, the channel setting result includes, for example, success of the channel setting (there may also be a case where parameters of the channel setting and the like are included) and failure (there may also be a case where reasons for the failure are included).

Base station transmission message creation section 159 creates a cell update message to make a new connection with the detected cell reported from narrow band cell search section 155 or wide band cell search section 156. Furthermore, base station transmission message creation section 159 also creates a response message showing the channel setting result reported from channel setting section 158. The created message is outputted to base station message transmitting section 160.

Base station message transmitting section 160 adapts the message outputted from base station transmission message creation section 159 to an interface with base station 100 and transmits the message to base station 100. Base station transmission message creation section 159 and base station message transmitting section 160 function as requesting means that request a cell update.

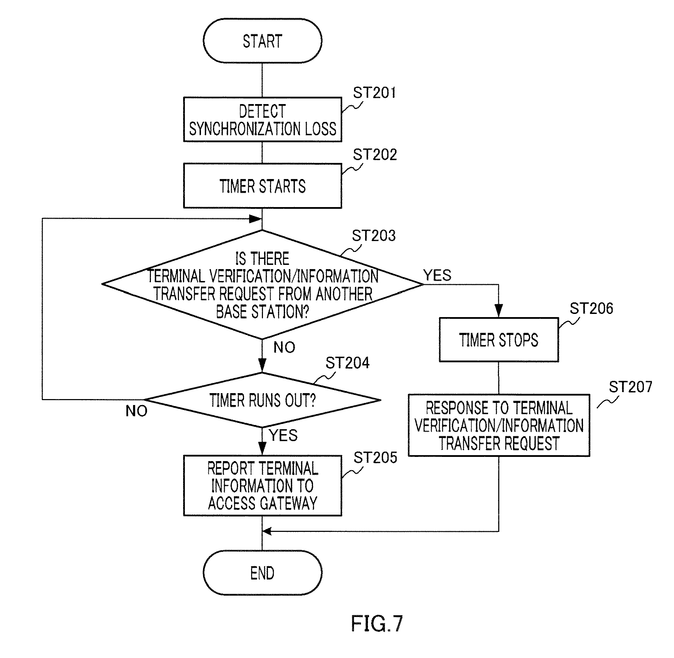

FIG.7 is a flowchart showing operation steps when base station 100 shown in FIG. 5 functions as a source base station (base station of the connection source). In this figure, in ST201, synchronization loss detection section 102 detects loss of synchronization with terminal 150, and, in ST202, time measuring section 103 starts the timer using the detection of synchronization loss as a trigger.

In ST203, other base station message receiving section 110 confirms whether or not there is a terminal verification/information transfer request from another base station. When there is such a request (YES), the flowproceeds to ST206, and, when there is no such a request (NO), the flow proceeds to ST204.

In ST204, other base station transmission message creation section 111 confirms to time measuring section 103 whether or not the timer runs out. When the timer runs out (YES), the flow proceeds to ST205, and, when the timer does not run out (NO), the flow proceeds to ST203.

In ST205, upper transmission message creation section 107 creates a message including terminal information for the access gateway and transmits the message to the access gateway through upper message transmitting section 109.

In ST206, other base station message creation section 111 causes time measuring section 103 to stop the timer, and, in ST207, other base station transmission message creation section 111 creates a response message in response to the terminal verification/information transfer request and transmits the message to another base station through other base station message transmitting section 112.

In this way, when the source base station reports the terminal information to the upper access gateway after the timer runs out and the terminal verification/information transfer request is received from another base station before the timer runs out, the terminal information is not reported to the access gateway. Here, by associating the timer set in the source base station with the time required for a narrow band cell search in terminal 150, it is possible to realize cell reselection without the access gateway when terminal 150 moves to the neighboring cell.

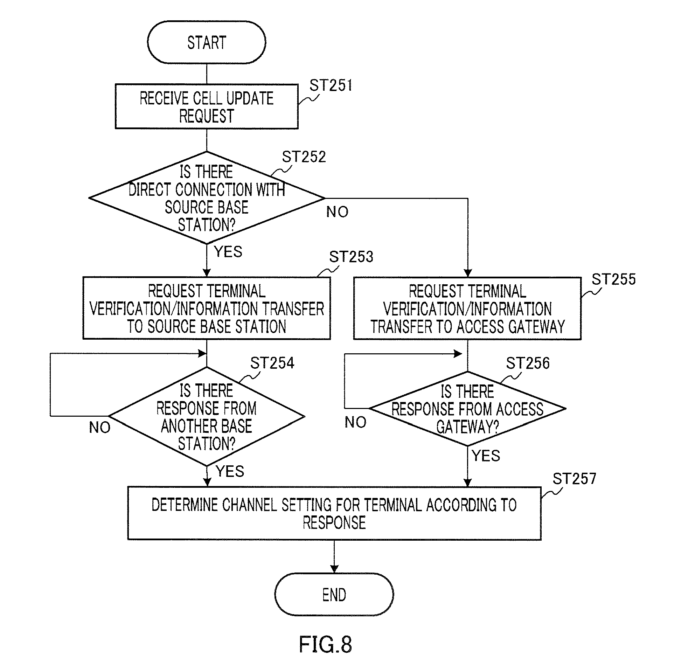

FIG. 8 is a flowchart showing operation steps when base station 100 shown in FIG. 5 functions as the target base station. In this figure, in ST251, received message processing section 104 receives a cell update request, and, in ST252, cell reselection processing section 105 refers to inter-base-station information management section 106 and decides whether or not there is a direct connection with the source base station. When there is a direct connection (YES), the flow proceeds to ST253, and, when there is no direct connection (NO), the flow proceeds to ST255.

In ST253, other base station transmission message creation section 111 creates a terminal verification/information transfer request message for another base station, and other base station message transmitting section 112 transmits the message to another base station using the direct connection.

In ST254, other base station message receiving section 110 confirms whether or not there is a response from another base station. When there is a response, the flow proceeds to ST257, and, when there is no response, the flow returns to ST254 and the verification is repeated until there is a response.

In ST255, upper transmission message creation section 107 creates a terminal verification/information transfer request message directed to the upper access gateway and transmits the message to the access gateway through upper message transmitting section 109.

In ST256, upper message receiving section 113 confirms whether or not there is a response from the access gateway. When there is a response (YES), the flow proceeds to ST257, and, when there is no response (NO), the flow returns to ST256 and the verification is repeated until there is a response.

In ST257, channel setting content determining section 114 determines channel setting content for terminal 150 according to the response from another base station or the response from the access gateway.

In this way, when there is a direct connection with the source base station, the target base station carries out communication using the direct connection without the access gateway, so that it is possible to reduce the processing load on the access gateway.

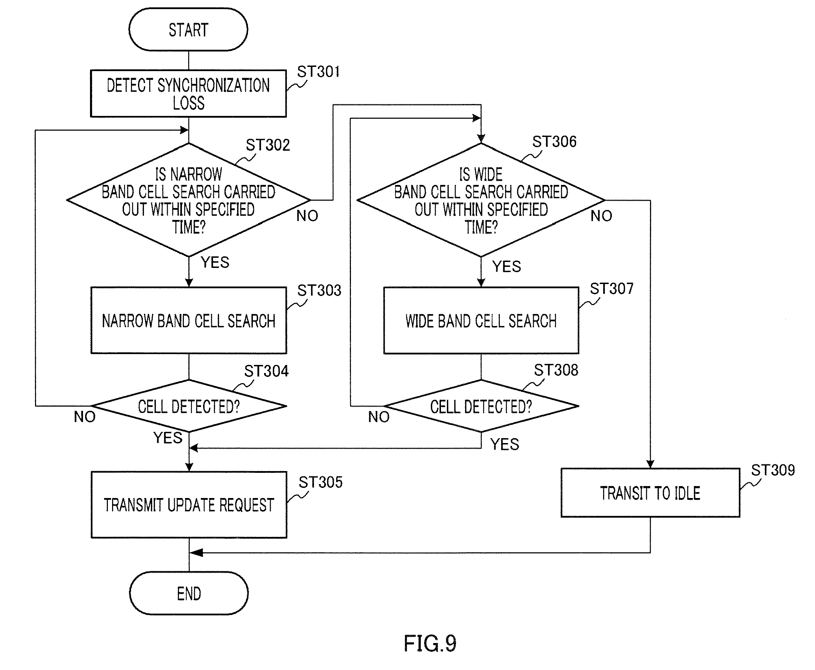

FIG.9 is a flowchart showing operation steps of terminal 150 shown in FIG.6. In this figure, in ST301, synchronization loss detection section 154 detects loss of synchronization with base station 100, and, in ST302, narrow band cell search section 155 decides whether or not the time required for a narrow band cell search falls within a specified time. The flow proceeds to ST303 when the time required for the narrow band cell search falls within the specified time (YES), and proceeds to ST306 when that time does not fall within the specified time (NO), that is, when the specified time is exceeded.

In ST303, narrow band cell search section 155 reads neighboring cell information, that is, a narrow band cell list from broadcast information management section 153, carries out a cell search using the narrow band cell list, and, in ST304, decides whether or not the cell has been successfully detected. When the cell has been detected (YES), the flow proceeds to ST305, and, when the cell has not been detected (NO), the flow returns to ST302.

In ST305, base station transmission message creation section 159 creates a cell update request message for the detected cell and transmits the message to base station 100 through base station message transmitting section 160.

In ST306, it is decided whether or not the time required by wide band cell search section 156 for a wide band cell search falls within a specified time. When the time falls within the specified time (YES), the flow proceeds to ST307, and, when the time does not fall within the specified time (NO), the flow proceeds to ST309.

In ST307, wide band cell search section 156 carries out a wide band cell search, that is, a cell search for cells other than the neighboring cell and, in ST308, decides whether or not the cell has been successfully detected. When the cell has been detected, the flow proceeds to ST305, and, when the cell has not been detected, the flow returns to ST306.

In ST309, terminal 150 transits to an Idle state.

In this way, terminal 150 carries out a cell search step by step by carrying out a cell search for the neighboring cell first and then carrying out a cell search for cells other than the neighboring cell when the neighboring cell has not been detected, so that it is possible to detect a neighboring cell to which a direct connection is set in a short time.

Next, the steps for cell reselection processing in the wireless communication system according to Embodiment 1 of the present invention will be explained with reference to the drawings. Here, suppose there is always a secure direct connection between the access gateway and base station (source base station and target base station) 100 and there is always a secure direct connection between neighboring base stations, too. Moreover, suppose base station 100 has information showing what cell is under the control of the neighboring base station. Furthermore, suppose terminal 150 is communicating with the source base station and a connection for data is established between the access gateway and the source base station.

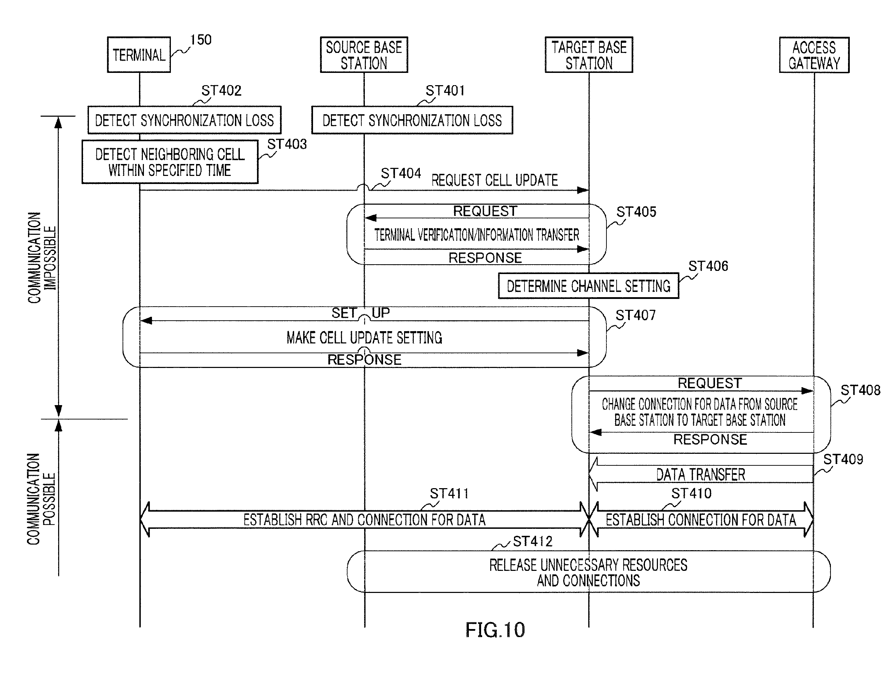

FIG.10 is a sequence diagram showing processing steps when a neighboring cell can be detected within a specified time. In FIG.10, in ST401, the source base station detects loss of synchronization with terminal 150, and, in ST402, terminal 150 detects loss of synchronization with the source base station, carries out a cell search in ST403 and detects the neighboring cell as the target base station within a specified time.

In ST404, terminal 150 transmits a cell update request to the target base station using the base station of the neighboring cell detected in ST403 as the target base station, and, in ST405, the target base station recognizes according to the cell update request in ST404 that there is a direct connection with the source base station, and transmits a terminal verification/information transfer request to the source base station using the direct connection. The source base station carries out an information transfer in response to the request from the target base station.

In ST406, the target base station verifies terminal 150 based on the information provided from the source base station and determines a channel setting based on information of the service and the like carried out so far.

In ST407, the target base station sets up a channel setting for terminal 150, and terminal 150 carries out the channel setting according to the command from the target base station and reports the result to the target base station.

In ST408, between the target base station and the access gateway, the connection for data is changed from the source base station to the target base station, and, in ST409, data is transferred from the access gateway to the target base station.

In ST410, a connection for data is established between the target base station and the access gateway, and, in ST411, RRC and the connection for data are established between terminal 150 and the target base station.

In ST412, the source base station, target base station and access gateway release unnecessary resources and connections. Here, for example, a connection between the source base station and the access gateway and a connection between the source base station and the target base station, are released.

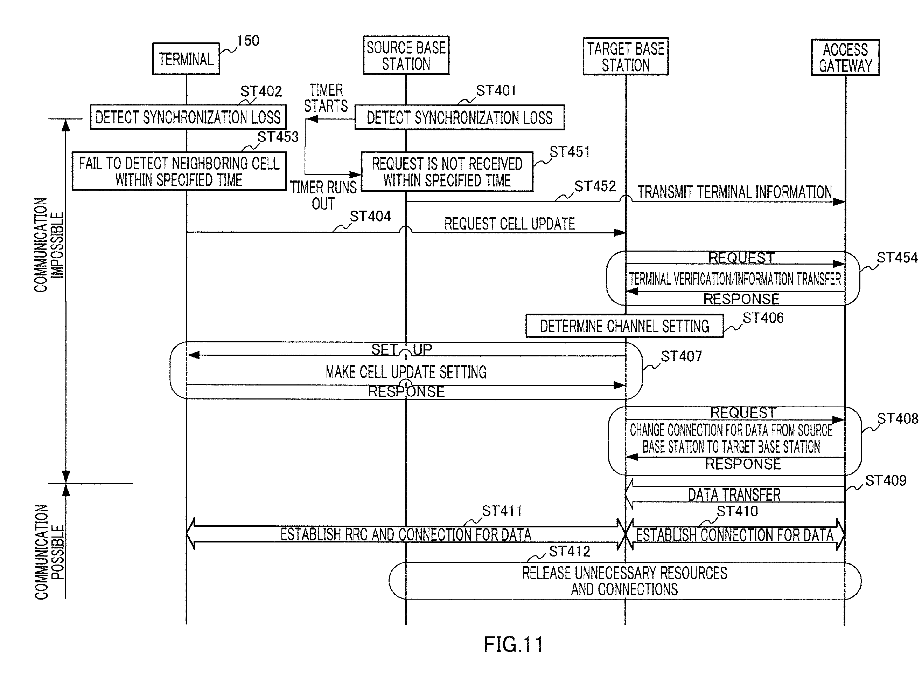

FIG. 11 is a sequence diagram showing processing steps when the neighboring cell cannot be detected within a specified time. However, in FIG.11, parts common in FIG.10 will be assigned the same reference numerals as those in FIG. 10 and detailed explanations thereof will be omitted. In FIG.11, in ST451, when the source base station has not received any terminal verification/information transfer request within a specified time after detecting loss of synchronization with terminal 150 in ST401, the source base station transmits terminal information to the access gateway in ST452.

In ST453, terminal 150 has not successfully detected the neighboring cell within a specified time, and, inST404, terminal 150 transmits a cell update request to the target base station.

In ST454, the target base station recognizes according to the cell update request in ST404 that there is no direct connection with the source base station, and the target base station transmits a terminal verification/information transfer request to the access gateway. The access gateway transfers information in response to the request from the target base station.

In this way, according to Embodiment 1, when loss of synchronization between the terminal and the source base station is detected, the terminal carries out a narrow band cell search targeting the neighboring base station connected with the source base station through a direct connection, carries out a wide band cell search targeting base stations other than the neighboring base station when the neighboring base station is not detected, and makes a cell update request using the detected base station as the target base station, the source base station transmits terminal information to the access gateway after the timer runs out for which the time required for the terminal to carry out a narrow band cell search is taken into consideration, and the target base station which has received the cell update request is able to distribute the processing necessary to verify the terminal and transfer terminal information between the source base station and the access gateway by acquiring the terminal verification and terminal information from the source base station or access gateway depending on whether or not there is a direct connection with the source base station, so that it is possible to reduce the processing load on the base station and access gateway.

Although a case has been explained with the present embodiment where a two-step cell search of a narrow band cell search and wide band cell search is carried out, the present invention is not limited to this, and a cell search may be carried out by dividing the wide band cell search into a different number of steps.

Furthermore, although, with the present embodiment, the unit for carrying out a narrow band cell search is assumed to be a specified time, the present invention is not limited to this, and the time the narrow band cell search is carried out may also be specified as a specified number of times. Furthermore, in this case, the source base station side calculates a specified time based on the time and the specified number of times required for one cell search. Here, the specified number of times or specified time may also be defined by default or may be reported from the base station through broadcast information or may be reported with dedicated information. These three methods may also be combined as appropriate.

Although, with the present embodiment, a transfer of terminal information between base stations connected through a direct connection is assumed to start after receiving a cell update request from the terminal, if the number of base stations connected through direct connections is small, the source base station may broadcast terminal information in advance to all base stations connected through direct connections. Explaining this referring to FIG. 5, upon detecting loss of synchronization with the terminal, synchronization loss detection section 102 outputs the detection result to other base station transmission message creation section 111 through a signal line (not shown), and other base station transmission message creation section 111 creates a message including terminal information to be transmitted to the base station connected through a direct connection and transmits the message through other base station message transmitting section 112.

By this means, when the target base station connected through a direct connection receives a cell update request from the terminal, the target base station can use terminal information broadcasted in advance, thereby finishing cell reselection processing in a short time. The base station which has received the terminal information may discard the terminal information when the time required for the terminal to carry out a narrow band cell search passes.

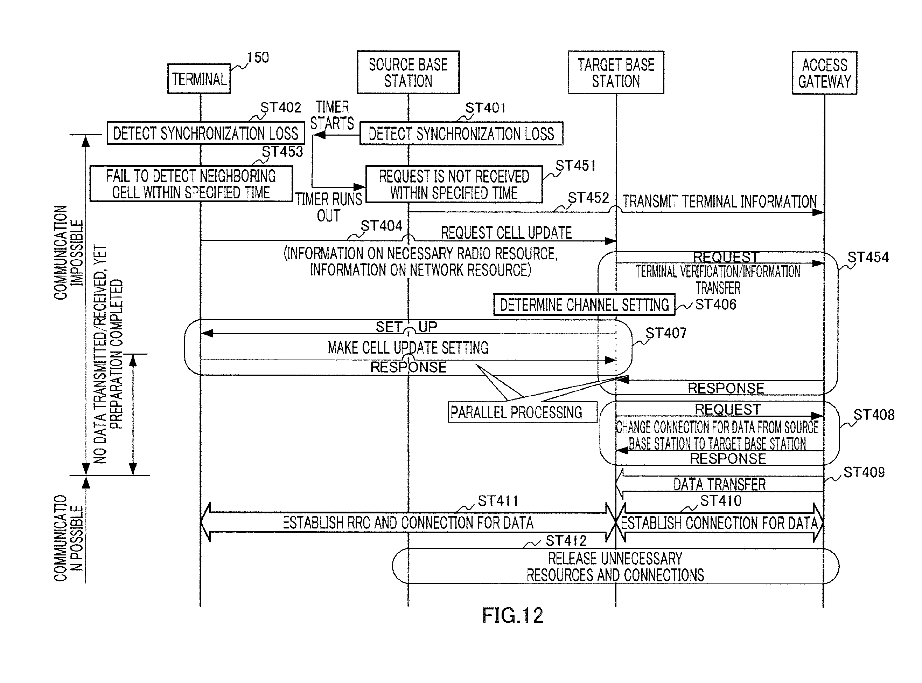

Furthermore, although, with the present embodiment, the "execution of a cell update setting" is assumed to be carried out after "terminal verification/information transfer" by the target base station, as described in FIG. 12, the "execution of a cell update setting" and "terminal verification/information transfer" can also be carried out as parallel processing. That is, information of the necessary radio resources and network resources can be included in a cell update request, and the target base station can set the information without waiting for a response from the source base station or access gateway. Although there may be useless radio resources in the scheme for assigning a fixed resource to each terminal, the present method sets only control channels that do not use many radio resources at this time in a scheme using shared channels, which is under study in LTE (scheme for sharing common resources in a plurality of terminals), so that it is possible to reduce useless radio resources at minimum. After this, actual communication is started after a response from the source base station or access gateway. This allows the communication to start earlier. Furthermore, when this terminal is an illegal terminal, release processing is carried out after a response from the source base station or access gateway.

Furthermore, although a case has been described with the present embodiment where the base station itself detects loss of synchronization with a terminal utilizing, for example, the fact that a signal from the terminal cannot be received, the base station may also carry out paging on a terminal to confirm whether or not the terminal belongs to the cell of this base station and detect loss of synchronization with the terminal based on the presence/absence of the response thereof.

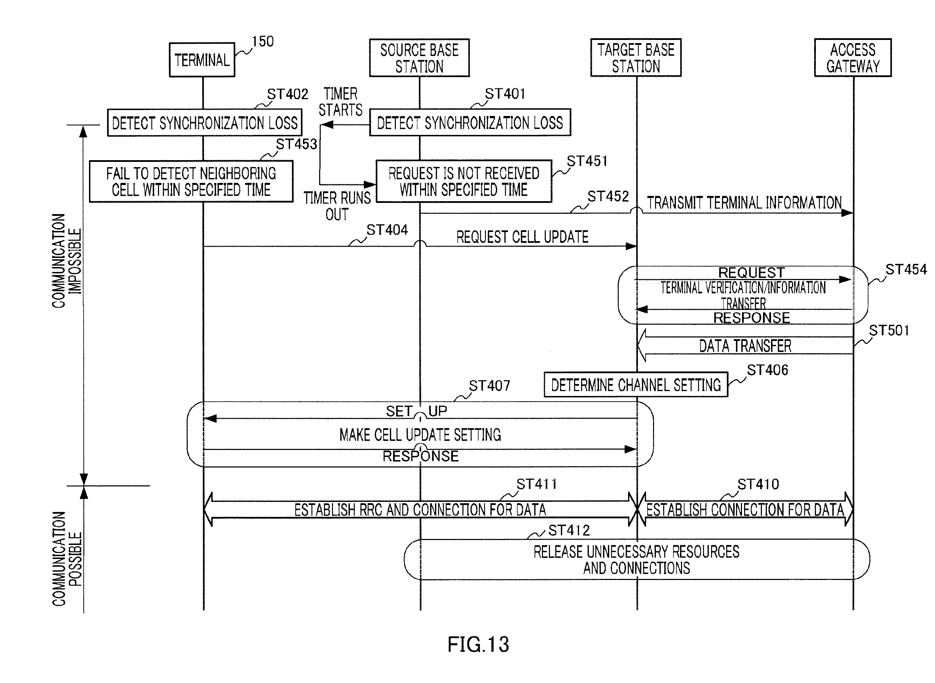

Furthermore, with the present embodiment, as shown in FIG. 13, in ST454, the target base station may also cause the terminal verification/information transfer request message to include a command for establishing a connection for data between the target base station and the access gateway and transmit the message to the access gateway. By this means, in ST501, it is possible to transfer data from the access gateway to the target base station and reduce a delay in the data transfer.

### (Embodiment 2)

The configuration of a base station according to Embodiment 2 of the present invention is similar to the configuration of Embodiment 1 shown in FIG. 5 and the configuration of a terminal according to Embodiment 2 of the present invention is similar to the configuration of Embodiment 1 shown in FIG.6, and therefore FIG. 5 and FIG. 6 will be employed and detailed explanations thereof will be omitted.

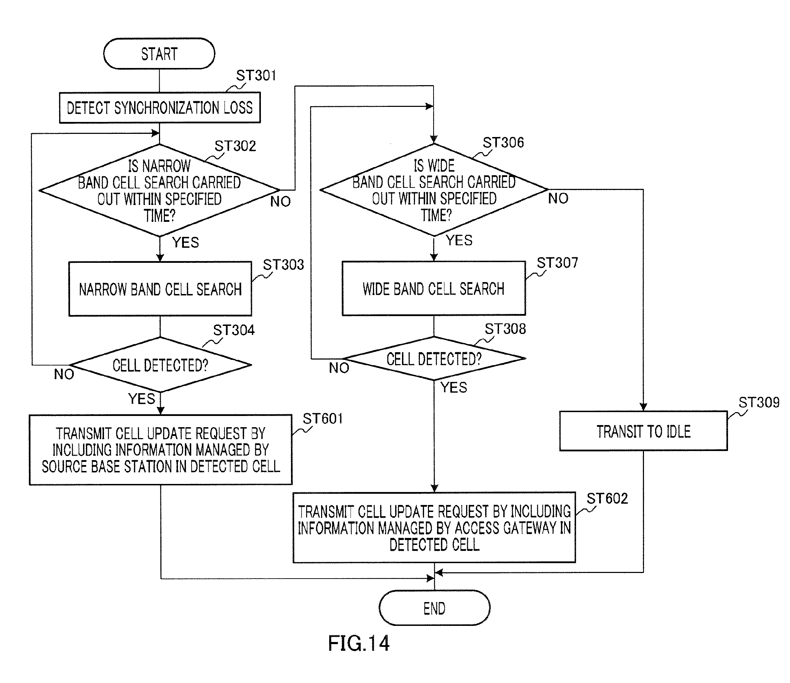

FIG.14 is a flowchart showing the operation of the terminal according to Embodiment 2 of the present invention. However, in FIG. 14, parts common in FIG. 9 will be assigned the same reference numerals as those in FIG.9 and detailed explanations thereof will be omitted. In FIG.14, in ST601, base station transmission message creation section 159 creates a cell update request message including information of the source base station and the terminal ID managed by the source base station for a cell detected by a narrow band cell search and transmits the message through base stationmessage transmitting section 160.

In ST602, base station transmission message creation section 159 creates a cell update request message including information of the access gateway and the terminal ID managed by the access gateway for a cell detected by a wide band cell search and transmits the message through basestation messagetransmittingsection 160.

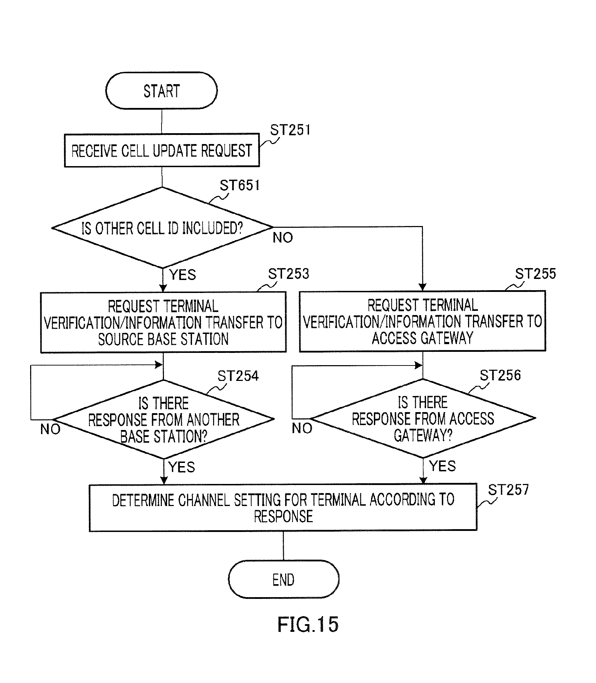

FIG.15 is a flowchart showing the operation of the target base station according to Embodiment 2 of the present invention. However, in FIG.15, parts common in FIG.8 will be assigned the same reference numerals as those in FIG.8 and detailed explanations thereof will be omitted. In FIG. 15, in ST651, cell reselection processing section 105 confirms whether or not a cell update request includes an ID of another cell. When the ID of another cell is included (YES), the flow proceeds to ST253, and, when the ID of another cell is not included (NO) , that is, when the ID of the access gateway is included, the flow proceeds to ST255.

In this way, according to Embodiment 2, by changing information included in a cell update request depending on whether a cell detected by a cell search is a narrow band cell (neighboring cell) or wide band cell (cell other than neighboring cell), the target base station can determine the destination of a terminal verification/information transfer request according to the cell update request. Furthermore, the terminal can reduce the size of a message to be transmitted, and the target base station can recognize the connection through a cell update request transmitted from the terminal without confirming whether or not the target base station is connected with the source base station through a direct connection.

### (Embodiment 3)

A case will be explained with Embodiment 3 of the present invention where Reactive Fast Handover of RFC4068 Fast Handover for Mobile IPv6 (FM IPv6) is applied to the system explained in Embodiment 1.

The configuration of a base station according to Embodiment 3 of the present invention is similar to the configuration of Embodiment 1 shown in FIG.5 and the configuration of a terminal according to Embodiment 3 of the present invention is similar to the configuration of Embodiment 1 shown in FIG.6, and therefore FIG.5 and FIG. 6 will be employed and detailed explanations thereof will be omitted. However, in the following explanations, suppose the terminal has a function of MN (Mobile Node) in RFC4068, the source base station has a function of PAR (Previous Access Router) in RFC4068, the target base station has a function of NAR (NewAccess Router) in RC4068 and the access gateway has a function of HA (Home Agent) in RFC3775.

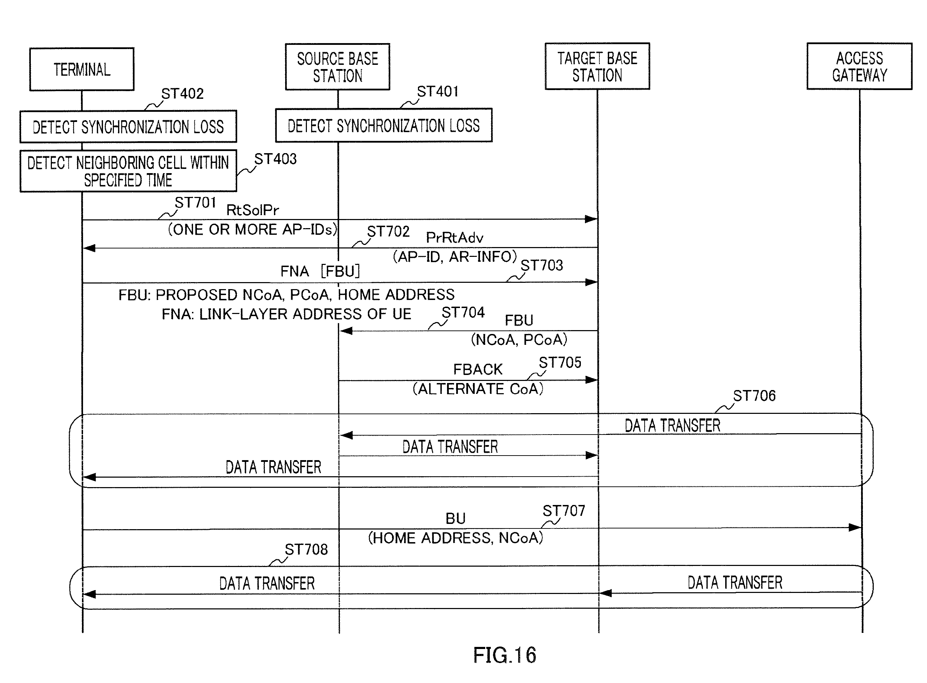

FIG.16 is a sequence diagram showing processing steps when a neighboring cell can be detected within a specified time. In FIG.16, parts common in FIG.10 will be assigned the same reference numerals as those in FIG. 10 and detailed explanations thereof will be omitted.

In ST701, the terminal detects RtSolPr (Router Solicitation for Proxy Advertisement) and transmits RtSolPr to the target base station of a cell in which RtSolPr has been detected. RtSolPr includes the cell ID (at least one or more AP-ID) detected by the terminal.

In ST702, the target base station extracts an AP-ID from RtSolPr transmitted from the terminal, sets a Prefix of the target base station shown by the extracted AP-ID in PrRtAdv (Proxy Router Advertisement) and transmits PrRtAdv to the terminal.

In ST703, the terminal creates a candidate of a new care of IP address to be utilized in the target base station (Proposed New Care of Address: Proposed NCoA) from the Prefix set in PrRtAdv transmitted from the target base station and creates FBU (Fast Binding Update) including created Proposed NCoA and the care of IP address utilized immediately before in the source base station (Previous Care of Address: PCoA). The terminal then creates FNA (Fast Neighbor Advertisement) including the created FBU and a layer 2 address of the terminal and transmits FNA to the target base station. ST701 to ST703 correspond to ST404 in FIG.10.

In ST704, the target base station extracts FBU from FNA transmitted from the terminal, verifies Proposed NCoA included in the extracted FBU and selects Proposed NCoA when there is no problem or another value when there is some problem and creates NCoA finally utilized by the terminal. The target base station then sets PCoA and the created NCoA in the FBU and transmits the FBU to the source base station.

In ST705, the source base station carries out processing to transfer a packet directed to the PCoA to the NCoA using the PCoA and NCoA set in the FBU transmitted from the target base station and transmits FBack to the target base station as acknowledgment of receipt of the FBU. ST704 and ST705 correspond to ST405 in FIG.10.

As shown above, in ST706, the data transmitted from the access gateway is transferred to the terminal passing through the source base station and target base station in order.

InST707, the terminal creates BU (BindingUpdate) including a new care of IP address and the home address (Home Address) of the terminal and transmits the BU to the access gateway. ST707 corresponds to ST408 in FIG. 10.

In ST708, the data transmitted from the access gateway is directly transferred from the target base station to the terminal based on the BU transmitted from the terminal.

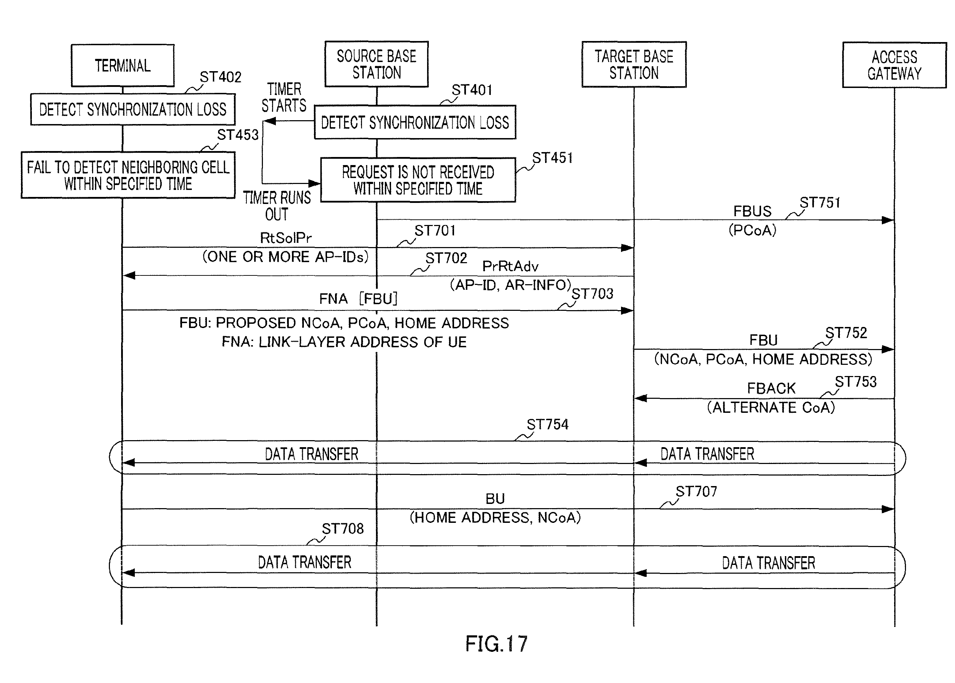

FIG.17 is a sequence diagram showing processing steps when a neighboring cell cannot be detected within a specified time. In FIG. 17, parts common in FIG. 16 will be assigned the same reference numerals as those in FIG.16 and detailed explanations thereof will be omitted.

In ST751, the source base station sets PCoA in FBUS (Fast Binding Update Store) and transmits the FBUS to the access gateway.

In ST752, the target base station extracts FBU from FNA transmitted from the terminal, verifies Proposed NCoA included in the extracted FBU, selects Proposed NCoA when there is no problem or another value when there is some problem and creates NCoA finally utilized by the terminal. The target base station then sets PCoA and the created NCoA in the FBU and transmits the FBU to the access gateway.

In ST753, the access gateway compares PCoA set in the FBUS transmitted from the source base station in ST751 with the PCoA set in the FBU transmitted from the target base station in ST752, and when these PCoA' s match, there is no direct connection from the source base station to the target base station, and therefore the access gateway carries out processing of transferring a packet directed to the PCoA to the NCoA. The access gateway then creates FBack as acknowledgment of receipt of the FBU and transmits the FBack to the target base station. ST752 and ST753 correspond to ST454 in FIG.11.

In ST754, the data transmitted from the access gateway is transferred to the terminal through the target base station.

In this way, according to Embodiment 3, even when FM IPv6 is used, if the terminal detects a neighboring cell within a time (specified time) required for the terminal to carry out a narrow band cell search, packet transfer processing is carried out using a direct connection between the neighboring base station (target base station) and the source base station, and, if the terminal cannot detect the cell within the specified time, packet transfer processing is carried out through the access gateway, and thereby processing required for cell reselection can be distributed between the source base station and the access gateway, so that it is possible to reduce the processing load on the base station and access gateway.

### (Embodiment 4)

A case will be described with embodiment 4 of the present invention where Proxy Mobile IPv6 (PM IPv6) of 3GPP SRJ-050061 local mobility for 3GPP System Architecture Evolution or Network-based Localized Mobility Management studied by the netlmm group of IETF is applied to the system explained in Embodiment 1.

The configuration of a base station according to Embodiment 4 of the present invention is similar to the configuration of Embodiment 1 shown in FIG.5 and the configuration of a terminal according to Embodiment 4 of the present invention is similar to the configuration of Embodiment 1 shown in FIG.6, and therefore FIG.5 and FIG. 6 will be employed and detailed explanations thereof will be omitted.

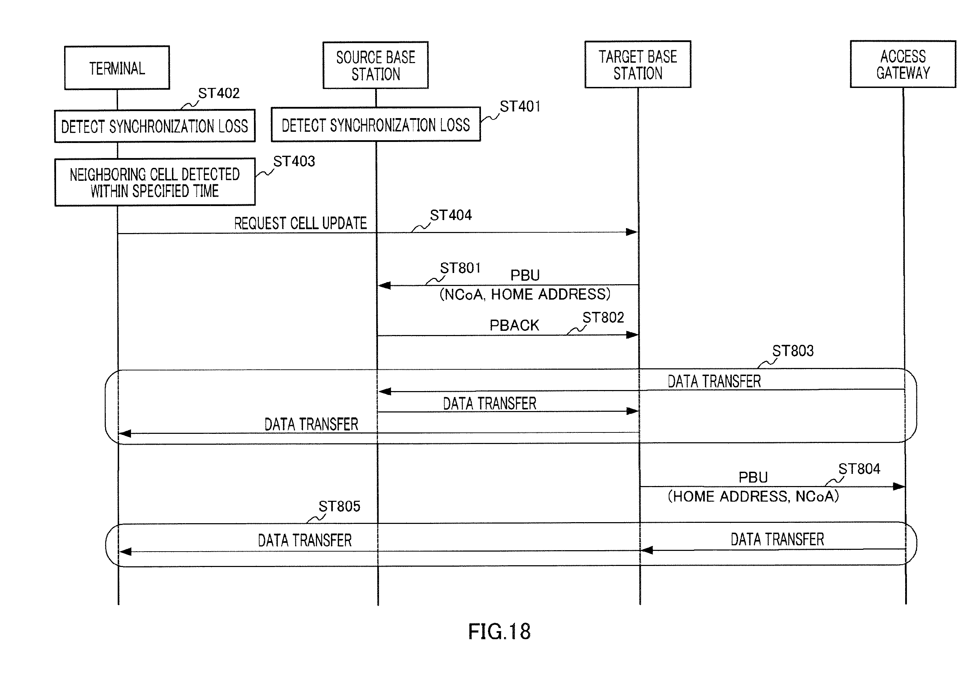

FIG. 18 is a sequence diagram showing processing steps when a neighboring cell can be detected within a specified time. In FIG.18, parts common in FIG.10 will be assigned the same reference numerals as those in FIG.10 and detailed explanations thereof will be omitted.

In ST801, upon receiving a cell update request from the terminal, the target base station creates NCoA to be utilized for the target base station from a Prefix of the target base station, sets the created NCoA and a home address of the terminal in PBU and transmits the PBU to the source base station.

In ST802, the source base station carries out processing to transfer a packet directed to the terminal to the NCoA from the home address set in the PUB transmitted from the target base station, creates PBack as acknowledgment of receipt of the PBU and transmits the PBack to the target base station. ST801 and ST802 correspond to ST405 in FIG.10.

In ST803, the data transmitted from the access gateway is transferred to the terminal passing through the source base station and the target base station in order.

In ST804, the target base station creates PBU including a new care of IP address and the home address of the target base station and transmits the PBU to the access gateway. ST804 corresponds to ST408 in FIG.10.

In ST805, the data transmitted from the access gateway is directly transferred to the terminal from the target base station based on BU transmitted from the terminal.

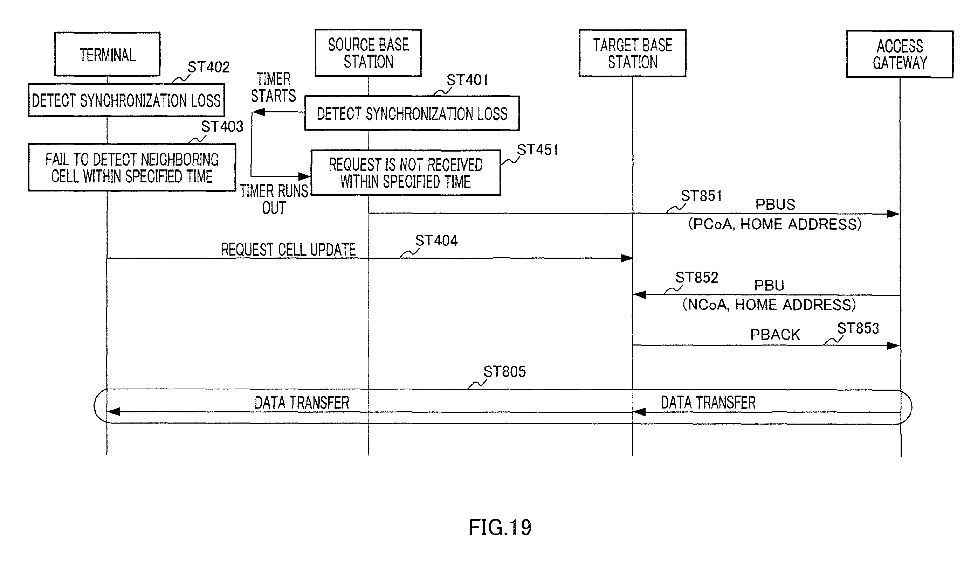

FIG.19 is a sequence diagram showing processing steps when a neighboring cell cannot be detected within a specified time. In FIG.19, parts common in FIG.18 will be assigned the same reference numerals as those in FIG. 18 and detailed explanations thereof will be omitted.

In ST851, the source base station sets the home address in PBUS (Proxy Binding Update Store) and transmits the PBUS to the access gateway. ST851 corresponds to ST452 in FIG.11.

In ST852, upon receiving a cell update request from the terminal, the target base station creates NCoA to be utilized for the target base station from a Prefix of the target base station, sets the created NCoA and the home address of the terminal in PBU and transmits the PBU to the access gateway.

In ST853, there is no direct connection from the source base station to the target base station, and so the access gateway carries out processing to transfer a packet directed to the terminal to the NCoA from the home address set in the PUB transmitted from the target base station, creates PBack as acknowledgment of receipt of the PBU and transmits the PBack to the target base station. ST852 and ST853 correspond to ST405 in FIG.10.

In this way, according to Embodiment 4, even when PM IPv6 is used, if the terminal detects a neighboring cell within a time (specified time) required for the terminal to carry out a narrow band cell search, packet transfer processing is carried out using a direct connection between the neighboring base station (target base station) and the source base station, and, if the terminal cannot detect the cell within the specified time, packet transfer processing is carried out through the access gateway, and the processing required for cell reselection can be distributed between the source base station and the access gateway, so that it is possible to reduce the processing load on the base station and access gateway.

The embodiments have been explained so far.

Although cases have been described with the above embodiment as examples where the present invention is configured by hardware, the present invention can also be realized by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC," "system LSI," "super LSI, " or "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosure of Japanese Patent Application No.2006-031588, filed on February 8, 2006, and Japanese Patent Application No.2006-114950, filed on April 18, 2006, including the specification, drawings and abstract is incorporated herein by reference in its entirety.

### Industrial Applicability

The wireless communication base station apparatus, wireless communication terminal apparatus and wireless communication system according to the present invention can reduce the processing load on the base station and access gateway in cell reselection processing and are applicable to a mobile communication system and the like.

## Claims

1. A wireless communication system comprising:
a wireless communication terminal apparatus;
a source base station apparatus; and
a target base station apparatus, wherein:
the wireless communication terminal apparatus comprises:
a first detection section that detects loss of synchronization with a wireless communication base station apparatus;
a first cell search section that, when synchronization loss is detected, carries out a cell search based on neighboringcellinformation managed by another wireless communication base station apparatus connected with the wireless communication base station apparatus with which synchronization is lost, through a direct connection;
a second cell search section that carries out a cell search targeting cells other than the neighboring cell when the neighboring cell is not detected by the first cell search section; and
a requesting section that transmits a cell update request to another wireless communication base station apparatus that manages a detected cell; the source base station apparatus comprises:
a second detection section that detects loss of synchronization with the wireless communication terminal apparatus; and
a withholding section that withholds transmission of identification information of the wireless communication terminal apparatus to an access gateway, which is an upper station, until a specified time passes after the synchronization loss is detected; and
the target base station apparatus comprises:
a cell reselection processing section that receives the cell update request from the wireless communication terminal apparatus and decides whether or not a cell to which the wireless communication terminal apparatus belonged immediately before belonging to a cell of the wireless communication base station apparatus, is a neighboring cell managed by the another wireless communication basestationapparatusconnected with the wireless communication base station apparatus through a direct connection, based on the cell update request;
a message creation section that creates a message for requesting the access gateway or another wireless communication base station apparatus that manages the neighboring cell, for information of the wireless communication terminal apparatus depending on whether or not the cell to which the wireless communication terminal apparatus belonged immediately before is the neighboring cell; and
a transmitting section that transmits the message.

2. A wireless communication base station apparatus comprising:
a cell reselection processing section that receives a cell update request from a wireless communication terminal apparatus and decides, based on the cell update request, whether or not a cell to which the wireless communication terminal apparatus belonged immediately before belonging to a cell of the wireless communication base station apparatus, is a neighboring cell managed by another wireless communication base station apparatus connected with the wireless communication base station apparatus through a direct connection;
a message creation section that creates a message requesting information of the wireless communication terminal apparatus from an access gateway, which is an upper station, or the another wireless communication base station apparatus that manages the neighboring cell depending on whether or not the cell to which the wireless communication terminal apparatus belonged immediately before, is the neighboring cell; and
a transmitting section that transmits the message.

3. The wireless communication base station apparatus according to claim 2, further comprising an inter-base-station information management section that manages information showing the another wireless communication base station apparatus connected with the wireless communication base station apparatus through a direct connection,
wherein the cell reselection processing section decides whether or not a cell to which the wireless communication terminal apparatus belonged immediately before belonging to the cell of the wireless communication base station, is the neighboring cell based on the information showing the managed another wireless communication base station apparatus.

4. The wireless communication base station apparatus according to claim 2, further comprising a channel setting content determining section that determines a channel setting of the wireless communication terminal apparatus according to a response from the access gateway or the another wireless communication base station apparatus that manages the neighboring cell.

5. The wireless communication base station apparatus according to claim 2, wherein the message creation section requests information of the wireless communication terminal apparatus from the access gateway and also requests establishment of a connection for data between the access gateway and the wireless communication base station apparatus.

6. The wireless communication base station apparatus according to claim 2 that applies FM IPv6 or PM IPv6.

7. A wireless communication base station apparatus comprising:
a detection section that detects loss of synchronization with a wireless communication terminal apparatus; and
a withholding section that withholds transmission of identification information of the wireless communication terminal apparatus to an access gateway, which is an upper station, until a specified time passes after detecting synchronization loss.

8. The wireless communication base station apparatus according to claim 7, further comprising a message creation section that creates a message that broadcasts neighboring cell information managed by another wireless communication base station apparatus connected with the wireless communication base station apparatus through a direct connection, to the wireless communication terminal apparatus.

9. A wireless communication terminal apparatus comprising:
a detection section that detects loss of synchronization with a wireless communication base station apparatus;
a first cell search section that, when synchronization loss is detected, carries out a cell search based on neighboring cell information managed by another wireless communication base station apparatus connected with the wireless communication base station apparatus with which synchronization is lost, through a direct connection;
a second cell search section that carries out a cell search targeting cells other than the neighboring cell when the neighboring cell is not detected by the first cell search section; and
a requesting section that transmits a cell update request to the wireless communication base station apparatus that manages a detected cell.

10. The wireless communication terminal apparatus according to claim 9, further comprising:
a message creation section that creates different messages depending on whether the detected cell is detected by the first cell search section or the second cell search section; and
a transmitting section that transmits the message to the wireless communication base station apparatus that manages the detected cell.

11. The wireless communication terminal apparatus according to claim 9 that applies FM IPv6 or PM IPv6.
